## Europäisches Patentamt

**European Patent Office**

**Office européen des brevets**

(19)

(11) Veröffentlichungsnummer: **0 344 493**

**A1**

(12) # EUROPÄISCHE PATENTANMELDUNG

(21) Anmeldenummer: **89108458.4**

(51) Int. Cl.⁴: **B60G 17/00**

(22) Anmeldetag: **11.05.89**

(30) Priorität: **28.05.88 DE 3818188**

(43) Veröffentlichungstag der Anmeldung:
**06.12.89 Patentblatt 89/49**

(84) Benannte Vertragsstaaten:
**DE FR GB IT SE**

(71) Anmelder: **DAIMLER-BENZ
AKTIENGESELLSCHAFT
Mercedesstrasse 136
D-7000 Stuttgart 60(DE)**

(72) Erfinder: **Schüssler, Robert
Weinbergstrasse 22
D-7000 Stuttgart 1(DE)**
Erfinder: **Acker, Bernd
Mittelstrasse 6/1
D-7300 Esslingen(DE)**

(54) **Aktives Federungssystem.**

(57) An den Rädern bzw. Radaufhängungen des Fahrzeuges sind Weggeber (2) angeordnet, aus deren Signalen ein Rechner (5) einen gemittelten Bodenabstand, einen gemittelten Wankwinkel sowie einen gemittelten Nickwinkel ermittelt. Diese gemittelten Istwerte werden mit vorgegebenen bzw. vorgebbaren Sollwerten verglichen. Die daraufhin vom Rechner (5) bewirkte Korrektur der Abstützkräfte der Abstützaggregate (10) ist davon abhängig, inwieweit der Fahrzeugaufbau zur Annäherung der Ist- an die Sollwerte reine Hubbewegungen, reine Wankbewegungen und/oder reine Nickbewegungen ausführen muß und zu welchen Anteilen die zur Dämpfung von Wank- oder Nickbewegungen erforderlichen Kräfte von den Abstützaggregaten (10) der Vorder- oder Hinterräder aufgebracht werden sollen. Dabei können die zum Ausgleich von Wankbewegungen dienenden Kräfte so auf die Vorder- und Hinterräder verteilt werden, daß sich eine gewünschte Steuertendenz des Fahrzeuges, insbesondere eine Tendenz zum Untersteuern, ergibt.

Fig.3

## Aktives Federungssystem

Die Erfindung betrifft ein aktives Federungssystem für Kraftfahrzeuge od dgl. mit den Rädern zugeordneten Istwertgebern, welche jeweils ein den Abstand zwischen Fahrzeugaufbau und Rad wiedergebendes Signal erzeugen und einem Rechner zuführen, sowie mit den Rädern zugeordneten Feder-bzw. Abstützaggregaten, deren Abstützkräfte und/oder den Hubbewegungen der Räder entgegenwirkende Widerstände vom Rechner gesteuert werden, wobei der Rechner aus den Signalen der Istwertgeber jeweils einen Istwert des gemittelten Bodenabstandes, einen Istwert des gemittelten Wankwinkels sowie einen Istwert des gemittelten Nickwinkels des Fahrzeugaufbaus bestimmt und die Feder- bzw. Abstützaggregate in Abhängigkeit von den Abweichungen dieser Istwerte von vorgegebenen bzw. vorgebbaren Sollwerten ansteuert.

Bei herkömmlichen passiven Federungssystemen hängt der Wert der Abstützkräfte jeweils nur von den Hubstellungen der Räder ab, d.h. die von einem Federaggregat erzeugte Abstützkraft wächst mit geringer werdendem Abstand zwischen dem jeweiligen Rad und dem Aufbau des Fahrzeuges an. Trotz des hohen Entwicklungsstandes passiver Federungssysteme bleibt es unvermeidbar, daß bei der Abstimmung Kompromisse eingegangen werden müssen. Wird beispielsweise die Federung im Hinblick auf einen hohen Komfort weich abgestimmt, so wird sich der Fahrzeugaufbau bei schneller Kurvenfahrt vergleichsweise stark zur Kurvenaußenseite hin neigen. Bei Kurvenfahrt treten also größere Wankwinkel auf. Zwar besteht die Möglichkeit, die Wankwinkel durch Anordnung von Stabilisatoren zu vermindern, welche beim Einfedern eines Rades das entsprechende Rad auf der anderen Fahrzeugseite ebenfalls in Einfederrichtung zu drängen suchen, so daß auch die Federaggregate auf der Kurveninnenseite zur Abstützung der Räder auf der Kurvenaußenseite herangezogen werden. Derartige Stabilisatoren beeinträchtigen jedoch den Federungskomfort, wenn das Fahrzeug nur mit den Rädern einer Fahrzeugseite über Bodenunebenheiten fährt oder wenn schräg zur Fahrtrichtung verlaufende Bodenwellen überfahren werden.

Die DE-OS 34 08 292 zeigt nun ein aktives Federungssystem, bei dem die Tatsache ausgenutzt wird, daß jede Bewegung des Fahrzeugaufbaus eine Kombination aus einer reinen Hubbewegung relativ zu einer Bezugsebene sowie einer Rotation um die Fahrzeuglängsachse (Wankbewegung) und einer Rotation um die Fahrzeugquerachse (Nickbewegung) darstellt. Gemäß der DE-OS 34 08 292 werden diese Bewegungskomponenten separat analysiert, wodurch die Möglichkeit geboten wird, die Abstütz- bzw. Federaggregate bei Veränderungen der Hubstellungen der Räder unterschiedlich anzusteuern, je nachdem, ob die Veränderungen der Radstellung durch eine reine Wankbewegung oder eine reine Nickbewegung bzw. eine reine Hubbewegung des Aufbaus oder durch unterschiedliche Kombinationen dieser Bewegungskomponenten bewirkt wurde. Dadurch wird gleichzeitig die Möglichkeit geboten, bei unterschiedlichen Bewegungstypen des Fahrzeugaufbaus unterschiedlich mittels der Feder- bzw. Abstützaggregate gegenzusteuern. Insbesondere ist es beispielsweise möglich, Hubbewegungen des Fahrzeugaufbaus zur Erzielung eines guten Komforts vergleichsweise weich abzufedern, während Wank- und Nickbewegungen im Hinblick auf ein sicheres Fahrverhalten wesentlich stärker entgegengewirkt wird. So kann erreicht werden, daß sich das Fahrzeug, trotz weicher Abstimmung der Federung gegenüber Hubbewegungen, bei Kurvenfahrt nur wenig zur Kurvenaußenseite hin neigt. Da Nick- und Wankbewegungen des Fahrzeuges weitestgehend verhindert werden können, treten nur geringe Nick- und Wankwinkel auf, d.h. der jeweils zur Verfügung stehende Federweg eines Rades wird kaum durch Schräglagen des Fahrzeugaufbaus bezüglich der Ebene der Fahrbahn beeinträchtigt. Damit wird die Möglichkeit geboten, die Federung gegenüber Hubbewegungen sehr komfortabel abzustimmen, weil der zur Verfügung stehende Federweg durch Nick- bzw. Wankbewegungen des Fahrzeuges nur unwesentlich eingeschränkt werden kann. Des weiteren wird der Vorteil erreicht, daß die Radaufhängungen praktisch nur Bewegungen nahe ihrer Optimallage ausführen und somit kein durch die Einfederungskinematik verursachtes Eigenlenkverhalten des Fahrzeuges auftreten kann.

Aus der DE-OS 32 12 433 ist ein aktives Federungssystem bekannt, bei dem mittels Sensoren von den Hubstellungen der Räder bzw. der zugeordneten Abstützaggregate abhängige Signale erzeugt werden, welche sich mit zunehmender Abweichung der Hubstellung von einer Ausgangs- bzw. Ruhelage progressiv ändern. Diese Signale werden nun mittels eines Rechners verglichen, wobei der Rechner jeweils ermittelt, welches Abstützaggregat bzw. Rad am weitesten von der Ausgangs- bzw. Ruhelage abweicht. Sodann wird das diesem Rad zugeordnete Abstützaggregat im Sinne einer Änderung der jeweiligen Abstützkraft angesteuert.

Die DE-OS 31 01 194 zeigt ein aktives Federungssystem, bei dem zunächst Signale erzeugt werden, die die Vertikalbeschleunigungen einzelner Radgruppen wiedergeben. Aus diesen Signalen wird ermittelt, inwieweit die zugeordneten Abstützaggregate ausgelenkt werden sollen. Daraufhin werden die Abstützaggregate derart angesteuert, daß die jeweils gemessene Auslenkung derselben der anzustrebenden Auslenkung angenähert wird.

Die DE-OS 24 41 172 betrifft ein Federungssystem, bei dem im wesentlichen nur die Stärke der Dämpfung der Federungshübe aktiv beeinflußt wird. Dazu werden mittels entsprechender Sensoren Signale erzeugt, die die Hubstellung der den Rädern zugeordneten Abstützaggregate sowie die Vertikalbeschleunigungen des Fahrzeuges bei den jeweiligen Abstütz aggregaten wiedergeben. Sodann wird die Dämpfung des Federungssystems derart verändert, daß die Beschleunigungen des Fahrzeugaufbaus einem Sollwert angenähert werden, welcher von der Hubstellung der Abstützaggregate abhängt.

Aufgabe der Erfindung ist es nun, ein aktives Federungssystem zu schaffen, welches sich besonders optimal abstimmen läßt.

Diese Aufgabe wird bei einem Federungssystem der eingangs angegebenen Art erfindungsgemäß dadurch gelöst, daß der Rechner die Feder- bzw. Abstützaggregate derart ansteuert, daß zur Unterdrückung bzw. Dämpfung von Wankbewegungen des Fahrzeugaufbaus dienende Kräfte von den Feder- bzw. Abstützaggregaten der Vorder- und Hinterräder zu vorgebbaren Anteilen aufbringbar sind, um eine vorgebbare bzw. vorgegebene Steuertendenz des Fahrzeuges - z.B. Untersteuern, Übersteuern oder neutrales Verhalten - zu erreichen.

Dementsprechend kann bei dem erfindungsgemäßen Federungssystem mit einem besonders sicheren und gut beherrschbaren Fahrverhalten auch in extremen Situationen gerechnet werden. Dabei ist besonders vorteilhaft, daß die Steuertendenz des Fahrzeuges auch bei unterschiedlicher Beladung annähernd gleichgehalten werden kann.

Die Erfindung nutzt die Erkenntnis, daß ein aktives Federungssystem, bei dem die Nick-, Wank- und Hubbewegungen des Fahrzeugaufbaus entkoppelt ausgesteuert werden können, besonders gute Voraussetzungen zur optimalen Abstimmung des Steuerverhaltens des Fahrzeuges bietet.

Zweckmäßigerweise können als gemittelter Bodenabstand der Mittelwert der Abstände aller Räder gegenüber dem Fahrzeugaufbau bzw. eine damit korrigierte Größe verwendet werden.

Als gemittelter Nickwinkel können die Differenz zwischen dem Mittelwert der Abstände der Vorderräder vom Fahrzeugaufbau und dem Mittelwert der Abstände der Hinterräder vom Fahrzeugaufbau oder eine mit dieser Differenz korrelierte Größe dienen. Als gemittelter Wankwinkel sind die Differenz zwischen dem Mittelwert der Abstände der rechten Räder vom Fahrzeugaufbau und dem Mittelwert der Abstände der linken Räder vom Fahrzeugaufbau oder eine mit dieser Differenz korrelierte Größe geeignet. Werden die oben aufgeführten Mittelwerte verwendet, so wird die Lage des Fahrzeuges relativ zu einer Bezugsebene bestimmt, die parallel zu zwei Geraden ist, von denen die eine die Radaufstandsbereiche des rechten Vorderrades sowie des linken Hinterrades und die andere die Radaufstandsbereiche des linken Vorderrades und des rechten Hinterrades durchsetzt.

Gemäß einer bevorzugten Ausführungsform der Erfindung ist vorgesehen, daß die Stellsignale für die Feder- und Abstützaggregate bzw. die durch die Stellsignale bewirkte Korrektur der Stützkräfte und/oder Widerstände gegenüber Hubbewegungen der Räder jeweils einen Wert haben, welcher im wesentlichen der Summe derjenigen Werte entspricht, die der Rechner für eine alleinige Korrektur des Bodenabstandes, eine alleinige Korrektur des Nickwinkels sowie eine alleinige Korrektur des Wankwinkels errechnen würde. Auf diese Weise können in regelungstechnisch einfacher Art unter- schiedliche Bewegungsarten des Fahrzeugaufbau- es voneinander entkoppelt beeinflußt werden.

Bei Extremsituationen kann die tatsächlich am Feder- und Abstützaggregat eingestellte Stellkraft von dem errechneten Wert abweichen. Derartiges tritt vor allem dann auf, wenn die errechnete Stützkraft nahe oder oberhalb der maximal erzeugbaren Stützkraft liegt. In derartigen Extremfällen kann die Federung unter Umständen durchschlagen. Um dabei Schäden zu vermeiden, sind wie bei herkömmlichen Federungssystemen nachgiebige Anschläge für Radführungselemente angeordnet.

Des weiteren ist bei dem erfindungsgemäßen Federungssystem vorteilhafterweise vorgesehen, den Rechner aus den Gebersignalen jeweils die zeitliche Veränderung der Istwerte des gemittelten Bodenabstandes, des gemittelten Nickwinkels sowie des gemittelten Wankwinkels bestimmen zu lassen und die Feder- und Abstützaggregate auch in Abhängigkeit von der Änderungsgeschwindigkeit der genannten Istwerte anzusteuern. Somit hängen die jeweils an den Feder- und Abstützaggregaten eingestellten Stützkräfte einerseits von der Art der Bewegung des Fahrzeugaufbaus ab, d.h. davon, ob der Fahrzeugaufbau Hubbewegungen, Nickbewegungen und/oder Wankbewegungen ausführt; andererseits wird auch berücksichtigt, mit welcher Geschwindigkeit diese Bewegungen erfolgen.

Grundsätzlich können die Räder Hubbewegungen ausführen, die nicht zu einer Änderung des Mittelwertes des Bodenabstandes und/oder des Mittelwertes des Nickwinkels und/oder des Mittelwertes des Wankwinkels führen. Wenn beispielsweise das rechte Vorderrad sowie das linke Hinterrad gleichzeitig um gleiche Federwege einfedern und gleichzeitig das linke Vorderrad sowie das rechte Hinterrad um entsprechende Federwege ausfedern, so bleiben die genannten Mittelwerte unverändert, wenn dieselben in der oben angegebenen Weise bestimmt werden. Um zu verhindern, daß derartige Radbewegungen über längere Zeit angeregt werden können, genügt es, wenn das erfindungsgemäße Federungssystem immer im Sinne einer schwachen Grunddämpfung von Federungshüben arbeitet.

Stattdessen ist es auch möglich, daß der Rechner die die genannten Mittelwerte nicht beeinflussenden Radbewegungen aus den Gebersignalen ermittelt und erst beim Auftreten derartiger Bewegungen die Feder- und Abstützaggregate im Sinne einer Dämpfung dieser Bewegungen ansteuert.

Gegebenenfalls kann das Fahrzeug Aufbaubeschleunigungsgeber und/oder Radbeschleunigungsgeber besitzen, um das erfindungsgemäße Federungssystem noch besser an wechselnde Fahrzustände anpassen zu können. Dadurch wird insbesondere die Möglichkeit geschaffen, auf Beschleunigungen oder Verzögerungen des Fahrzeuges bzw. auf eine beginnende Kurvenfahrt frühzeitig zu reagieren, bevor der Fahrzeugaufbau größere Nick- bzw. Wankbewegungen auszuführen sucht. Mittels der genannten Beschleunigungsgeber besteht nämlich die Möglichkeit, die Sollwerte für die Stützkräfte der Feder- und Abstützaggregate sehr frühzeitig zu verändern, bevor der Fahrzeugaufbau beim Bremsen, Beschleunigen oder beim Einschlagen der Lenkung größere Bewegungen ausführen kann. Diejenigen Trägheitskräfte, die Nick- und Wankbewegungen zu erzeugen suchen, können also sofort durch entsprechende Gegenkräfte kompensiert werden, so daß Wank- und Nickbewegungen praktisch gar nicht erst entstehen können.

Auf diese Weise läßt sich besonders wirkungsvoll eine "harte" Federkennung für die Nick- und Wankbewegungen des Fahrzeugaufbaus unter Beibehaltung einer Komfortgünstigen "weichen" Einfederungsbewegung der einzelnen Räder erzielen.

Im übrigen wird hinsichtlich bevorzugter Merkmale der Erfindung auf die Unteransprüche sowie die nachfolgende Beschreibung einer bevorzugten Ausführungsform anhand der Zeichnung verwiesen.

Dabei zeigt

Fig. 1 eine schematisierte Darstellung eines Personenkraftwagens mit dem erfindungsgemäßen Federungssystem,

Fig. 2 ein Schnittbild eines Feder- bzw. Abstützaggregates und

Fig. 3 eine schaltplanartige Darstellung der Erfindung.

Die Räder des Fahrzeuges sind mittels hydraulischer Feder-und Abstützaggregate 10, welche als Kolben-Zylinder-Aggregate ausgebildet sind, gegenüber dem Fahrzeugaufbau abgestützt. Als hydraulische Druckquelle dient eine vom Fahrzeugmotor angetriebene Pumpe 8, welche saugseitig mit einem Reservoir 7 für Hydrauliköl verbunden ist und druckseitig an einen Verteiler 9 angeschlossen ist, von dem aus Druckleitungen zu den Feder- und Abstützaggregaten 10 führen, die des weiteren über Entlastungsleitungen mit dem Reservoir 7 verbunden sind. Die Zufuhr von Hydraulikmedium in die Feder- und Abstütz aggregate sowie die Abfuhr von Hydraulikmedium aus diesen Aggregaten wird über jeweils an den Feder- und Abstützaggregaten 10 angeordnete Ventilanordnungen 11 gesteuert, die ihrerseits mittels eines Rechners bzw. Mikroprozessors 5 betätigt werden, der eingangsseitig mit den Rädern des Fahrzeuges zugeordneten Weggebern 2 verbunden ist. Die Weggeber 2 erzeugen Signale, welche die jeweilige Hubstellung der Räder relativ zum Fahrzeugaufbau wiedergeben. Des weiteren kann der Rechner bzw. Mikroprozessor 5 eingangsseitig mit Radbeschleunigungsgebern 1 und/oder Aufbaubeschleunigungsgebern 3 verbunden sein. Außerdem kann noch ein manuell betätigbarer Befehlsgeber 6 vorgesehen sein, um dem Fahrer Eingriffe in die Steuerung des Federungssystems zu ermöglichen. Die Steuerbefehle des Rechners bzw. Mikroprozessors 5 für die Ventilanordnungen 11 bzw. die den Rechner bzw. Mikroprozessor 5 zuzuführenden Signale der Geber 1 bis 3 werden über ein Datennetz weitergegeben, welches zumindest teilweise Datenbusleitungen 4 aufweist.

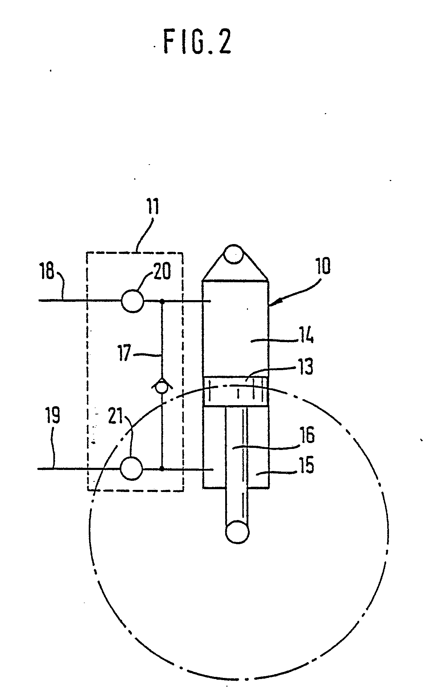

Die Abstützaggregate 10 sowie die Ventilanordnungen 11 sind in Fig. 2 etwas konstruktiver dargestellt.

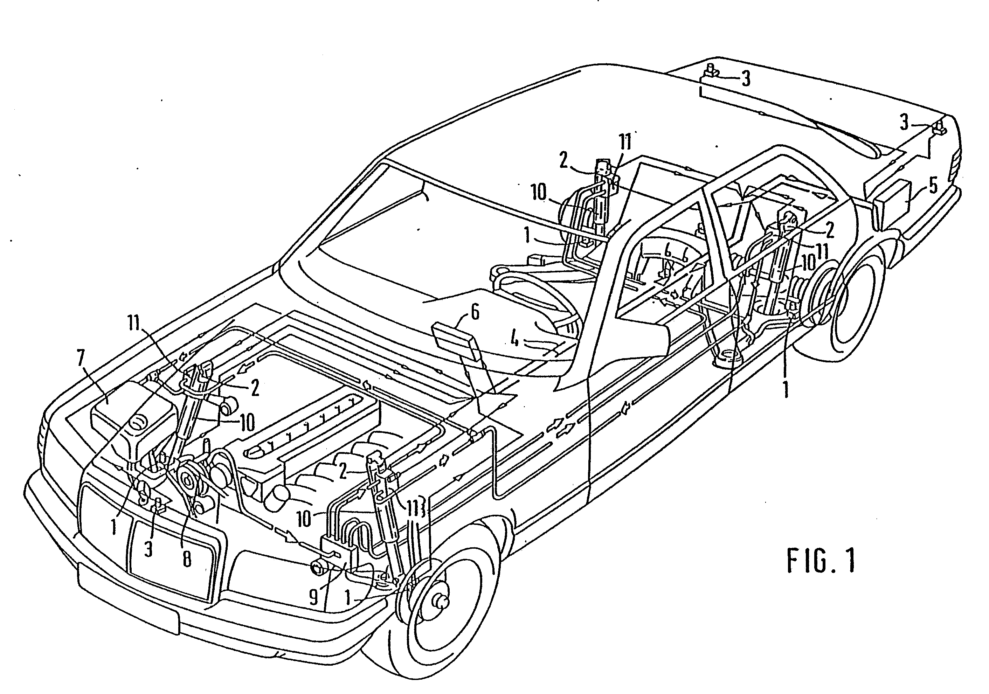

Jedem Rad 12 kann ein als Kolben-Zylinder-Aggregat ausgebildetes Abstützaggregat 10 zugeordnet sein, welches jeweils eine oberhalb des Kolbens 13 angeordnete Kammer 14 sowie eine unterhalb des Kolbens 13 angeordnete Kammer 15 besitzt. Der Druck in der Kammer 14 sucht den Kolben 13 in Fig. 2 nach unten zu schieben, während der Druck in der Kammer 15 in entgegengesetzter Richtung wirkt. Bei Druckgleichheit in den Kammern 14 und 15 wird der Kolben 13 nach unten gedrängt, weil die vom Druck in der Kammer 15 beaufschlagte Stirnfläche des Kolbens 13 aufgrund der Kolbenstange 16 kleiner ist als die vom Druck in der Kammer 14 beaufschlagte Stirnfläche des Kolbens 13. Die Kammern 14 und 15 sind miteinander über eine Leitung 17, in der gegebenenfalls ein bei Strömung in Richtung der Kammer 15 öffnendes Rückschlagventil angeordnet sein kann, verbunden. An die Leitung 17 ist eine mit der Druckseite der Pumpe 8 bzw. dem Verteiler 9 (vgl. Fig. 1) verbundene Druckleitung 18 angeschlossen (und zwar zwischen dem gege benenfalls in der Leitung 17 angeordneten Rückschlagventil und der Kammer 14). Außerdem zweigt von der Leitung 17 (und zwar zwischen dem gegebenenfalls darin angeordneten Rückschlagventil und der Kammer 15) eine Entlastungsleitung 19 ab. Die Zufuhr von Druckmedium über die Druckleitung 18 bzw. die Abfuhr von Druckmedium über die Entlastungsleitung 19 werden durch Ventile 20 und 21 der Ventilanordnung 11 gesteuert. Diese Ventile sind bevorzugt als Drosselventile mit stufenlos steuerbarem Drosselwiderstand ausgebildet.

Durch entsprechende Steuerung der Ventile 20 und 21 kann der Druck in den Kammern 14 und 15 innerhalb konstruktiv vorgegebener Grenzen variiert werden. In diesem Zusammenhang ist anzumerken, daß hohe Werte des Druckes in den Kammern 14 und 15 insbesondere dann, wenn das jeweilige Rad 12 einzufedern sucht, durch kurzzeitiges Schließen der Ventile 20 und 21 bzw. durch Schließen des Ventiles 20 und starke Drosselung des Ventiles 21 eingestellt werden können.

Das dargestellte System arbeitet in der folgenden Weise:

Die Signale der Weggeber 2 sind ein Maß für den Abstand der Räder bzw. der Radachsen vom Fahrzeugaufbau und dementsprechend auch ein Maß für den Abstand des Fahrzeugaufbaus vom Boden im Bereich des jeweiligen Rades. Aus den Signalen der Weggeber 2 kann der Rechner bzw. Mikroprozessor 5 nunmehr einen mittleren Bodenabstand bestimmen, beispielsweise indem der Mittelwert der von den Weggebern 2 an den vier Rädern des Fahrzeuges gemessenen Bodenabstände gebildet wird. Veränderungen des mittleren Bodenabstandes zeigen also an, daß das Fahrzeug relativ zum Boden eine Hubbewegung in der einen oder anderen Richtung ausführt.

Des weiteren kann aus den Signalen der Weggeber 2 ein mittlerer Nickwinkel bestimmt werden, beispielsweise indem zunächst der Mittelwert der Bodenabstände an den Vorderrädern und der Mittelwert der Bodenabstände an den Hinterrädern ermittelt werden und sodann die Differenz dieser Mittelwerte bestimmt wird. Zeitliche Änderungen dieser Differenz zeigen dann an, daß der Fahrzeugaufbau relativ zum Boden Nickschwingungen, d.h. Drehbewegungen um die Fahrzeugquerachse in der einen oder anderen Richtung, ausführt.

Des weiteren kann aus den Signalen der Weggeber 2 ein Mittelwert des Wankwinkels bestimmt werden. Dazu werden der Mittelwert der Bodenabstände des Fahrzeugaufbaus an den Rädern der rechten Seite und der Mittelwert der Bodenabstände an den Rädern der linken Fahrzeugseite gebildet und sodann die Differenz dieser Mittelwerte bestimmt. Zeitliche Änderungen dieser Differenz zeigen an, daß das Fahrzeug Wankbewegungen ausführt, d.h. Drehungen um die Fahrzeuglängsachse in der einen oder anderen Richtung.

Die auf diese Weise bestimmten Nick- und Wankwinkel haben gleichzeitig den Wert Null, wenn der Fahrzeugaufbau etwa parallel zu einer Ebene ausgerichtet ist, die ihrerseits parallel zu einer die Radaufstandspunkte des rechten Vorderrades und des linken Hinterrades verbindenden geraden Linie sowie parallel zu einer die Radaufstandspunkte des linken Vorderrades und rechten Hinterrades verbindenden geraden Linie ist.

Erfindungsgemäß ist nun vorgesehen, daß der Rechner bzw. Mikroprozessor 5 jeweils den mittleren Bodenabstand, den mittleren Wankwinkel sowie den mittleren Nickwinkel bzw. die zeitliche Veränderung dieser Größen registriert. Dies ist gleichbedeutend damit, daß der Rechner bzw. Mikroprozessor jede Bewegung des Fahrzeugaufbaus relativ zum Boden in eine Hubbewegung, eine Wankbewegung sowie eine Nickbewegung zerlegt. Damit wird die Möglichkeit geschaffen, den unterschiedlichen Bewegungsarten des Fahrzeugaufbaus in unterschiedlicher Weise, d.h. insbesondere mit unterschiedlicher Progressivität, entgegenzusteuern.

Beispielsweise besteht die Möglichkeit, gegenüber Hubbewegungen ein weiches Federungsverhalten zu erreichen, während das Federungsverhalten gegenüber Nick- und Wankbewegungen deutlich härter, d.h. mit höherer Federsteifigkeit, eingestellt ist. Treten also Abweichungen zwischen dem Istwert des mittleren Bodenabstandes und dem jeweiligen Sollwert auf, so können die Abstützkräfte der Abstützaggregate 10 - zumindest innerhalb eines mittleren Bereiches der Federungshübe - relativ geringfügig geändert werden, um eine besonders komfortbetonte Federung zu erzielen. Bei Abweichungen zwischen den Mittelwerten von Wankwinkel bzw. Nickwinkel und den jeweiligen Sollwerten können dagegen stärkere Änderungen der Abstützkräfte der Abstützaggregate 10 vorgenommen werden, um insbesondere bei höheren Geschwindigkeiten ein sicheres Fahrverhalten zu gewährleisten.

Erfindungsgemäß wird also die Abstützkraft eines Abstützaggregates nicht in erster Linie in Abhängigkeit von der jeweiligen Hubstellung des Rades bestimmt, vielmehr ist für die Bemessung der Abstützkräfte entscheidend, inwieweit der Fahrzeugaufbau zur Erreichung einer gewünschten Sollage eine reine Hubbewegung relativ zum Boden und/oder eine Drehung um die Fahrzeuglängsachse (Änderung des Wankwinkels) und/oder eine Drehung um die Fahrzeugquerachse (Änderung des Nickwinkels) ausführen muß.

Dabei können die zur Korrektur der jeweiligen Hubstellung sowie zur Korrektur des jeweiligen Wankwinkels und zur Korrektur des jeweiligen Nickwinkels separat errechneten Änderungen bzw. Korrekturen der Abstützkräfte der Abstützaggregate 10 einfach additiv miteinander verknüpft werden, d.h. die an jedem Abstützaggregat tatsächlich vorgenommene Veränderung der Abstützkraft entspricht jeweils der Summe der Einzelkorrekturen, die für eine gewünschte Änderung der Hubstellung bzw. des Wankwinkels bzw. des Nickwinkels errechnet wurden.

In Extremfällen kann die errechnete Gesamtkorrektur außerhalb der konstruktiven Möglichkeiten der Abstützaggregate liegen. In einem derartigen Falle stellt sich am jeweiligen Abstützaggregat 10 der konstruktiv erreichbare Grenzwert ein.

Durch die Beschleunigungsgeber 1 und 3, insbesondere durch die Radbeschleunigungsgeber 1, kann der Rechner bzw. Mikroprozessor bestimmte Fahrzustände besonders frühzeitig erkennen. Beispielsweise tritt bei einem plötzlichen starken Ausschlag der Lenkung eine merkliche Querbeschleunigung der Räder bzw. des Fahrzeugaufbaus ein, bevor sich der Fahrzeugaufbau zur jeweiligen Kurvenaußenseite hin zu neigen sucht, d.h. bevor der jeweilige Fahrzustand zu einem durch die Weggeber 2 registrierbaren Wankwinkel führt. Ähnliches gilt im Falle starker Verzögerungen bzw. Beschleunigungen des Fahrzeuges. Auch hier reagiert der Fahrzeugaufbau erst nach einer gewissen Verzögerungszeit mit Nickbewegungen, die durch die Weggeber 2 festgestellt werden können. Durch Anordnung der Beschleunigungsgeber 1 und 3 wird daher die Möglichkeit geschaffen, daß der Rechner bzw. Mikroprozessor 5 bereits frühzeitig auf zu erwartende Wank- oder Nickbewegungen des Fahrzeugaufbaus "vorbereitet" wird und die Abstützaggregate 10 bereits zur Erzeugung entsprechender Gegenkräfte ansteuert, bevor die Nick- und/oder Wankbewegungen tatsächlich auftreten. Nick- und/oder Wankbewegungen werden damit praktisch vollständig vermieden.

Grundsätzlich besteht die Möglichkeit, daß das eine Vorderrad sowie das diagonal gegenüberliegende Hinterrad gleichzeitig einfedern, während das andere Vorderrad und das demselben diagonal gegenüberliegende andere Hinterrad gleichzeitig ausfedern. Falls die Einfederungshübe und die Ausfederungshübe alle gleich groß sind, ändern sich die Mittelwerte des Bodenabstandes, des Wankwinkels und des Nickwinkels nicht. Gleichwohl sind derartige Radbewegungen unerwünscht, weil dadurch die Bodenhaftung der Räder verlorengehen kann. Deshalb ist vorgesehen, den Hubbewegungen der Räder, insbesondere beim Einfedern, immer einen gewissen Dämpfungswiderstand entgegenzusetzen, welcher beispielsweise dadurch erzeugt werden kann, daß während des Einfederungshubes das Ventil 21 (vgl. Fig. 2) entsprechend gedrosselt wird (das Ventil 20 ist während des Einfederungshubes in der Regel geschlossen). Im übrigen besteht die Möglichkeit, daß der Rechner bzw. Mikroprozessor 5 aus den Signalen der Weggeber 2 ermittelt, ob bzw. inwieweit Radbewegungen der zuletzt angegebenen Art auftreten. Sodann können die Abstützaggregate 10 bzw. deren Ventilanordnungen 11 im Sinne einer mehr oder weniger starken Dämpfung dieser Radbewegungen angesteuert werden.

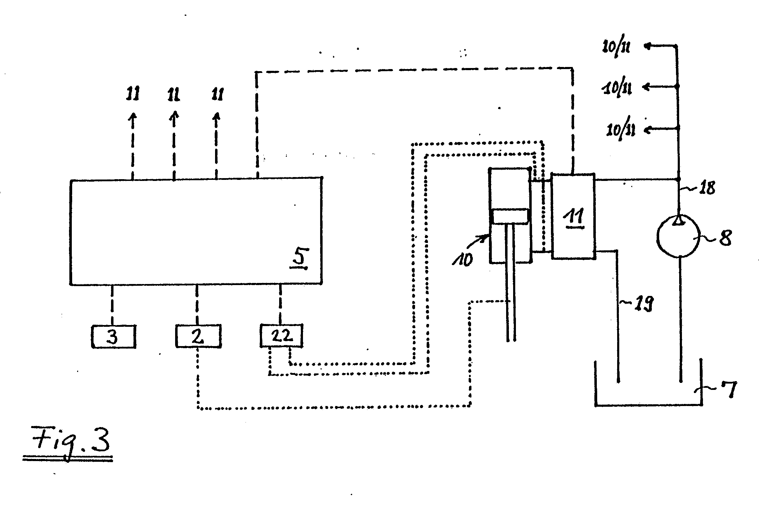

In Figur 3 ist die Erfindung schaltplanartig dargestellt, wobei einander entsprechende Elemente die gleichen Bezugszeichen wie in den Figuren 1 und 2 haben. Dabei sind Fluid-Leitungen mit durchgezogenen Linien und elektrische Leitungen mit strichlierten Linien dargestellt. Durch punktierte Linien wird wiedergegeben, daß die Weggeber 2 von der Stellung der Abstützaggregate 10 und damit vom Abstand zwischen den Fahrzeugrädern und dem Fahrzeugaufbau abhängige Signale wiedergeben.

Aus Gründen der Übersichtlichkeit ist in Figur 3 lediglich ein einziges Abstützaggregat 10 mit zugehöriger Ventilanordnung 11 sowie zugeordnetem Weggeber 2 dargestellt; tatsächlich sind diese Elemente jeweils mehrfach entsprechend der Zahl der Räder des Fahrzeuges angeordnet.

Abweichend von der Darstellung in Figur 1 ist in Figur 3 jedem Abstützaggregat 10 ein Kraftbzw. Druckgeber 22 zugeordnet, dessen Signal die jeweils vom Abstützaggregat 10 aufgebrachte Abstützkraft wiedergibt. Dazu kann der Kraft- bzw. Druckgeber nach Art eines Druckmessers ausgebildet sein, welcher auf den Fluid-Druck im Abstützaggregat 10 reagiert. Stattdessen ist es auch möglich, daß der Kraft- bzw. Druckgeber 22 jeweils auf die zwischen Abstützaggregat 10 und Fahrzeugaufbau wirkenden Kräfte reagiert.

Mittels der Kraft- bzw. Druckgeber 22 kann der Rechner 5 die Ventilanordnungen 11 noch besser in Anpassung an die jeweiligen Fahrtumstände steuern, d.h. neben einer Steuerung in Abhängigkeit von den Signalen der Weggeber 2 sowie der gegebenenfalls vorhandenen Aufbaubeschleunigungsgeber 3 ist auch eine Steuerung in Abhängigkeit von den Abstütz kräften möglich, die jeweils durch die Abstützaggregate 10 erzeugt werden.

Dies ist insbesondere dann von Vorteil, wenn mit dem Federungssystem auch das Lenkverhalten des Fahrzeuges in besonderer Weise beeinflußt werden soll.

Nach der Erfindung ist vorgesehen, die zur Unterdrückung bzw. Dämpfung von Wankbewegungen des Fahrzeugaufbaus dienenden Kräfte zu vorgebbaren Anteilen von den Feder-bzw. Abstützaggregaten 10 der Vorder- und Hinterräder des Fahrzeuges aufbringen zu lassen, um eine gewünschte Steuertendenz zu erreichen, wobei im Hinblick auf ein auch für ungeübte Fahrer gut beherrschbares Fahrverhalten in der Regel eine mehr oder weniger starke Tendenz zum Untersteuern erwünscht ist.

Grundsätzlich ist eine entsprechende Steuerung auch allein in Abhängigkeit von den Signalen der Weggeber 2 möglich, indem zur Unterdrükkung bzw. Dämpfung von Wankbewegungen, welche durch Auswertung der Weggebersignale feststellbar sind, die Feder- bzw. Abstützaggregate 10 der Vorder- und Hinterräder in vorzugebender Weise unterschiedlich angesteuert werden.

Falls die Kraft- bzw. Druckgeber 22 vorhanden sind, kann diese unterschiedliche Ansteuerung der Feder- bzw. Abstützaggregate 10 an den Vorder- und Hinterrädern des Fahrzeuges besonders feinfühlig erfolgen, weil Signale zur Verfügung stehen, die unmittelbar die Verteilung der Abstützkräfte auf die verschiedenen Feder- bzw. Abstützaggregate wiedergeben.

Gemäß einer besonders bevorzugten Ausführungsform der Erfindung ist vorgesehen, die Steuertendenz des Fahrzeuges in Abhängig keit von der Querbeschleunigung des Fahrzeuges zu regeln. Dabei besteht beispielsweise die Möglichkeit, zu erreichen, daß die Tendenz zum Untersteuern bei zunehmender Querbeschleunigung progressiv zunimmt, wobei die Untersteuertendenz gegebenenfalls relativ zur Querbeschleunigung entsprechend einer parabolischen Kurve ansteigt.

Für die Regelung können im Rechner jedem Wert der Querbeschleunigung entsprechend unterschiedliche Sollwerte für die Verteilung der den Wankbewegungen entgegenwirkenden Abstützkräfte auf die Vorder- und Hinterräder eingespeichert sein, so daß der Rechner den beispielsweise mittels der Kraft- bzw. Druckgeber 22 ermittelbaren Istwert der Verteilung der Abstützkräfte auf die Vorder- und Hinterräder mit dem jeweiligen Sollwert vergleichen und einer Abweichung zwischen Ist- und Sollwert durch entsprechende Steuerung der den jeweiligen Feder- bzw. Abstützaggregaten 10 zugeordneten Ventilanordnungen 11 entgegensteuern kann.

Dabei kann vorgesehen sein, die Regelung erst dann vorzunehmen, wenn die Querbeschleunigung des Fahrzeuges einen vorgebbaren Schwellwert überschreitet.

Dabei kann ein abruptes Verändern der Steuertendenz des Fahrzeuges bei Überschreitung des Schwellwertes der Querbeschleunigung gegebenenfalls dadurch vermieden werden, daß der Rechner 5 bei Erreichen des Schwellwertes der Querbeschleunigung als Sollwert für die Verteilung der Abstützkräfte auf die Feder- bzw. Abstützaggregate 10 der Vorder- und Hinterräder den jeweils ermittelten Istwert benutzt und ausgehend von diesem Wert mit zunehmender Beschleunigung progressiv wachsende Sollwerte im Sinne einer progressiven Zunahme der gewünschten Steuertendenz berechnet und durch Betätigung der Ventilanordnungen 11 ansteuert.

Erfindungsgemäß kann also beispielsweise eine mit zunehmender Querbeschleunigung des Fahrzeuges anwachsende Neigung zum Untersteuern erzielt werden. Dies ist deshalb von Vorteil, weil dadurch dem Fahrer bereits vor Erreichen eines kritischen Grenzbereiches der Querbeschleunigung aufgrund der zunehmenden Neigung des Fahrzeuges zum Untersteuern ein gutes Gefühl dafür gegeben wird, daß der Fahrzustand kritisch werden könnte. Dies führt dazu, daß der Fahrer intuitiv die Geschwindigkeit des Fahrzeuges verlangsamt und damit die Sicherheit des Fahrzustandes erhöht.

Unter Tendenz zum Untersteuern des Fahrzeuges wird verstanden, daß das Fahrzeug bei überhöhter Kurvengeschwindigkeit zunächst über die Vorderräder auszubrechen sucht. Der Vorzug dieses Steuerungsverhaltens liegt darin, daß bei Erreichen oder gar Überschreiten des Grenzbereiches der Bodenhaftung eine Verminderung der Geschwindigkeit genügt, um das Fahrzeug wieder beherrschbar zu machen. Insbesondere sind keine für ungeübte Fahrer schwierige Lenkmanöver auszuführen.

Die Querbeschleunigung des Fahrzeuges kann mittels der Aufbaubeschleunigungsgeber 3 ermittelt werden.

## Ansprüche

1. Aktives Federungssystem für Kraftfahrzeuge od.dgl. mit den Rädern zugeordneten Istwertgebern, welche jeweils ein den Abstand zwischen Fahrzeugaufbau und Rad wiedergebendes Signal erzeugen und einem Rechner zuführen, sowie mit den Rädern zugeordneten Feder-bzw. Abstützaggregaten, deren Abstützkräfte und/oder den Hubbewegungen der Räder entgegenwirkende Widerstände vom Rechner gesteuert werden, wobei der Rechner aus den Signalen der Istwertgeber jeweils einen Istwert des gemittelten Bodenabstandes, einen Istwert des gemittelten Wankwinkels sowie einen Istwert des gemittelten Nickwinkels des Fahrzeugaufbaus bestimmt und die Feder- bzw. Abstützaggregate in Abhängigkeit von den Abweichungen dieser Istwerte von vorgegebenen bzw. vorgebbaren Sollwerten ansteuert,
dadurch gekennzeichnet,
daß der Rechner (5) die Feder- bzw. Abstützaggregate (10) derart ansteuert, daß zur Unterdrückung bzw. Dämpfung von Wankbewegungen des Fahrzeugaufbaus dienende Kräfte von den Feder- bzw. Abstützaggregaten (10) der Vorder-und Hinterräder zu vorgebbaren Anteilen aufbringbar sind, um eine vorgebbare bzw. vorgegebene Steuertendenz des Fahrzeuges - z.B. Untersteuern, Übersteuern oder neutrales Verhalten - zu erreichen.

2. Aktives Federungssystem nach Anspruch 1, dadurch gekennzeichnet, daß als gemittelter Bodenabstand der Mittelwert der Abstände aller Räder gegenüber dem Fahrzeugaufbau bzw. eine damit korrelierte Größe verwendet werden.

3. Aktives Federungssystem nach einem der Ansprüche 1 oder 2, dadurch gekennzeichnet, daß als gemittelter Nickwinkel die Differenz zwischen dem Mittelwert der Abstände der Vorderräder vom Fahrzeugaufbau und dem Mittelwert der Abstände der Hinterräder vom Fahrzeugaufbau oder eine mit dieser Differenz korrelierte Größe verwendet werden.

4. Aktives Federungssystem nach einem der Ansprüche 1 bis 3, dadurch gekennzeichnet, daß als gemittelter Wankwinkel die Differenz zwischen dem Mittelwert der Abstände der rechten Räder vom Fahrzeugaufbau und dem Mittelwert der Abstände der linken Räder vom Fahrzeugaufbau oder eine mit dieser Differenz korrelierte Größe verwendet werden.

5. Aktives Federungssystem nach einem der Ansprüche 1 bis 4, dadurch gekennzeichnet, daß die Stellsignale für die Feder- bzw. Abstützaggregate (10) bzw. die durch die Stellsignale bewirkte Korrektur der Stützkräfte und/oder Widerstände jeweils einen Wert haben, welcher im wesentlichen der Summe derjenigen Werte entspricht, die der Rechner (5) für eine alleinige Korrektur des Bodenabstandes, eine alleinige Korrektur des Nickwinkels sowie eine alleinige Korrektur des Wankwinkels errechnen würde.

6. Aktives Federungssystem nach einem der Ansprüche 1 bis 5, dadurch gekennzeichnet, daß der Rechner (5) aus den Signalen der Istwertgeber (2) jeweils die zeitliche Veränderung der Istwerte des gemittelten Bodenabstandes, des gemittelten Wankwinkels und des gemittelten Nickwinkels bestimmt und die Feder- und Abstützaggregate (10) auch in Abhängigkeit von der Änderungsgeschwindigkeit der genannten Istwerte ansteuert.

7. Aktives Federungssystem nach einem der Ansprüche 1 bis 6, dadurch gekennzeichnet, daß Beschleunigungsgeber bzw. -sensoren (1,3) für die Beschleunigung des Fahrzeuges in Vertikalrichtung und/oder Längsrichtung und/oder Querrichtung angeordnet sind, wobei die Signale dieser Beschleunigungsgeber bzw. -sensoren (1,3) eine zusätzliche Stabilisierung des Fahrzeuges gegenüber Hub- und/oder Nick-und/oder Wankbewegungen bewirken, indem der Rechner (5) die Feder- bzw. Abstützaggregate (10) so ansteuert, daß aufgrund der jeweiligen Beschleunigung zu erwartenden Bewegungen des Fahrzeugaufbaus entgegengewirkt wird.

8. Aktives Federungssystem nach einem der Ansprüche 1 bis 7, dadurch gekennzeichnet, daß der Rechner (5) aus den Signalen der Istwertgeber (2) solche Radstellungen bzw. Radbewegungen ermittelt, die ohne Einfluß auf die Mittelwerte des Bodenabstandes, des Wankwinkels sowie des Nickwinkels sind, und die Feder- bzw. Abstützaggregate (10) im Sinne einer Dämpfung ansteuert, deren Wert von diesen Radstellungen bzw. Radbewegungen abhängt.

9. Aktives Federungssystem nach einem der Ansprüche 1 bis 8, dadurch gekennzeichnet, daß die Aufteilung der Anteile der zur Unterdrückung bzw. Dämpfung von Wankbewegungen des Fahrzeugaufbaus dienenden Kräfte der Feder- bzw. Abstützaggregate (10) auf die Vorder- und Hinterräder des Fahrzeuges in Abhängigkeit von der Querbeschleunigung des Fahrzeuges veränderbar ist.

10. Aktives Federungssystem nach Anspruch 9, dadurch gekennzeichnet, daß die Aufteilung im Sinne einer bei zunehmender Querbeschleunigung des Fahrzeuges zunehmenden Tendenz zum Untersteuern veränderbar ist.

11. Aktives Federungssystem nach Anspruch 10, dadurch gekennzeichnet, daß die Tendenz zum Untersteuern bei wachsender Querbeschleunigung progressiv ansteigt.

12. Aktives Federungssystem nach einem der Ansprüche 9 bis 11, dadurch gekennzeichnet, daß die Aufteilung der Anteile der zur Unterdrückung bzw. Dämpfung von Wankbewegungen des Fahrzeugaufbaus dienenden Kräfte der Feder- bzw. Abstützaggregate (10) auf die Vorder- und Hinterräder bzw. die gewünschte Steuertendenz des Fahrzeuges bzw. - insbesondere -die Tendenz zum Untersteuern regelbar sind.

13. Aktives Federungssystem nach Anspruch 12, dadurch gekennzeichnet, daß die Regelung erst bei einem Mindestwert der Querbeschleunigung einsetzt, wobei der Rechner (5) querbeschleunigungsabhängige, mit wachsender Querbeschleunigung progressiv anwachsende Sollwerte für die Aufteilung bzw. die Steuertendenz derart vorgibt, daß der dem Mindestwert der Querbeschleunigung zugeordnete Sollwert jeweils mit dem beim letzten Auftreten dieses Mindestwertes ermittelten Istwert übereinstimmt.

FIG. 1

EP 0 344 493 A1

Daim 19 387/E

18 641 -
Daim 19 387/E

# FIG.2

Fig. 3

Europäisches Patentamt

EUROPÄISCHER RECHERCHENBERICHT

Nummer der Anmeldung

EP 89 10 8458

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 236 947 (TOYOTA) * ganzes Dokument * --- | 1-4,7,9 -11 | B 60 G 17/00 |
| A | EP-A-0 246 655 (NISSAN MOTOR CO. LTD.) * Spalte 4, Zeilen 1-50 * --- | 1,7,9 | |
| A | EP-A-0 249 246 (NISSAN MOTOR CO. LTD.) * Seite 21, Zeilen 1-27; Seite 30, Zeilen 5-17 * --- | 1,7,9, 12 | |
| D,A | DE-A-3 408 292 (DAIMLER-BENZ AG) * ganzes Dokument * --- | 1-5,8 | |
| A | EP-A-0 114 757 (GROUP LOTUS CAR COMPANIES PLC) * ganzes Dokument * ----- | 1-4,7 | |

| | RECHERCHIERTE SACHGEBIETE (Int. Cl.4) |
|---|---|
| | B 60 G |

Der vorliegende Recherchenbericht wurde für alle Patentansprüche erstellt

| Recherchenort | Abschlußdatum der Recherche | Prüfer |
|---|---|---|
| BERLIN | 11-08-1989 | KRIEGER P O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument